(19) **Europäisches Patentamt / European Patent Office / Office européen des brevets**

(11) **EP 4 488 626 B1**

(12) **FASCICULE DE BREVET EUROPEEN**

(45) Date de publication et mention de la délivrance du brevet:
**25.02.2026   Bulletin 2026/09**

(21) Numéro de dépôt: **24182164.4**

(22) Date de dépôt: **14.06.2024**

(51) Classification Internationale des Brevets (IPC):
**G01C 21/20** *(2006.01)*   **G06F 7/00** *(2006.01)*
**G06N 20/00** *(2019.01)*   **G06N 3/045** *(2023.01)*

(52) Classification Coopérative des Brevets (CPC):
**G01C 21/20; G06N 3/045; G06N 20/00**

(54) **PROCEDE DE DETERMINATION D'UNE SIMILARITE ENTRE UNE PAIRE DE TRAJETS PARCOURUS**

**VERFAHREN ZUR BESTIMMUNG EINER ÄHNLICHKEIT ZWISCHEN EINEM DURCHSTRÖMTEN PFADPAAR**

**METHOD FOR DETERMINING A SIMILARITY BETWEEN A PAIR OF PASSING PATHS**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **07.07.2023   FR 2307300**

(43) Date de publication de la demande:
**08.01.2025   Bulletin 2025/02**

(73) Titulaire: **IFP Energies nouvelles**
**92500 Rueil-Malmaison (FR)**

(72) Inventeurs:
• **HAMMOUMI, Adam**
  **92852 RUEIL-MALMAISON CEDEX (FR)**
• **COLLET, David**
  **92852 RUEIL-MALMAISON CEDEX (FR)**
• **DE NUNZIO, Giovanni**
  **92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
• ANJARIA JANIT JANIT@CS UMD EDU ET AL: "TrajDistLearn learning to compute distance between trajectories", PROCEEDINGS OF THE 1ST ACM SIGSPATIAL INTERNATIONAL WORKSHOP ON SEARCHING AND MINING LARGE COLLECTIONS OF GEOSPATIAL DATA, ACMPUB27, NEW YORK, NY, USA, 2 November 2021 (2021-11-02), pages 1 - 9, XP058781602, ISBN: 978-1-4503-9123-8, DOI: 10.1145/3486629.3490693
• YOON SOOK ET AL: "Computation of discrete Fr?chet distance using CNN", 1 February 2010 (2010-02-01), pages 1 - 6, XP093124427, ISBN: 978-1-4244-6680-1, Retrieved from the Internet <URL:https://dx.doi.org/10.1109/CNNA.2010.5430251> DOI: 10.1109/CNNA.2010.5430251
• TAKEUCHI KOH TAKEUCHI@I KYOTO-U AC JP ET AL: "Fr?chet Kernel for Trajectory Data Analysis", 2 November 2021, MULTIMEDIA UNDERSTANDING WITH LESS LABELING ON MULTIMEDIA UNDERSTANDING WITH LESS LABELING, ACMPUB27, NEW YORK, NY, USA, PAGE(S) 221 - 224, ISBN: 978-1-4503-8685-2, XP058661358

## Description

## Domaine technique

La présente invention concerne le domaine de la détermination d'une distance entre deux trajets, en l'occurrence la distance de Fréchet.

Le domaine du transport revêt un aspect essentiel de la vie quotidienne dont l'économie mondiale dépend fortement. Cependant, il joue également un rôle majeur dans la dégradation de la qualité de l'air et dans l'augmentation des émissions de $CO_2$, en particulier dans les zones urbaines. Selon l'Organisation Mondiale de la Santé (OMS), le transport est l'une des principales sources de pollution atmosphérique, et il est directement lié à de multiples maladies respiratoires et cardiovasculaires. En outre, le transport mondial est à l'origine d'environ 24 % des émissions directes de $CO_2$ provenant de la combustion de carburants, dont près des trois quarts correspondent aux voitures, camions, bus et motos, ce qui aggrave encore le phénomène de réchauffement climatique. Parmi les autres types d'émissions nocives figurent les oxydes d'azote (NOx), l'ozone troposphérique ($O_3$) et les particules (PM), qui dépassent généralement les limites recommandées. L'importance du rôle des transports dans la qualité de l'air se reflète également dans le nombre croissant d'actions politiques menées en Europe au cours des dernières années, ce qui en fait un sujet central. Les stratégies visant à s'attaquer à ce problème sont notamment les suivantes : normes en matière d'efficacité des véhicules et des carburants à faible teneur en carbone, développement et incitations de véhicules à faibles émissions, politiques fiscales et régimes d'imposition.

Les nouvelles données de mobilité (Floating Car Data, données de capteurs de géolocalisation de type GPS des téléphones mobiles, données de bornage téléphonique, etc.) présentent un potentiel toujours peu exploité dans la modélisation des comportements de mobilité sur un territoire. Afin d'utiliser correctement ces données, il est nécessaire de les traiter (filtrage de bruit, suppression des valeurs aberrantes, etc.) et surtout de les contextualiser temporellement (séquences d'échantillons de données appartenant à un même déplacement) et géographiquement par rapport à un réseau de mobilité sous-jacent. En effet, une fois reconstruites les séquences de données (ou trajectoires) appartenant à un même déplacement, il est nécessaire de calculer une « distance » entre trajectoires (pour déterminer la similarité de deux trajectoires) ou entre une trajectoire et un référentiel cartographique (pour contextualiser géographiquement la trajectoire). Cette tâche est essentielle pour de nombreuses applications, par exemple : la détermination d'un mode de transport, le « map matching » (pouvant être traduit par cartospondance) qui consiste à projeter des trajectoires sur une référence cartographique pour déterminer les axes routiers empruntés par les utilisateurs, le contrôle des véhicules autonomes, etc.

La mesure de la similarité entre une paire de trajets est de la plus haute importance dans un nombre croissant d'applications ; les notions de distances entre trajectoires sont notamment au cœur de problèmes tels que le regroupement, la classification des trajectoires. Les choix habituels de mesures de similarité, pour lesquelles il existe de multiples variantes, comprennent notamment les méthodes basées sur les distances de Fréchet, la mesure de la distorsion temporelle dynamique (DTW), Hausdorff et euclidiennes, ainsi que ce qu'on appelle la plus longue suite commune (LCSS). Cependant, les deux premières mesures tendent à être un choix plus approprié pour l'étude des trajectoires des véhicules étant donné leur nature continue et ordonnée.

En général, la comparaison de formes de deux objets géométriques (en espace bidimensionnel ou tridimensionnel) passe par un calcul d'une métrique de distance permettant d'évaluer la similarité entre les courbes constituant ces objets. Par exemple, la distance dite de Fréchet offre un compromis efficace entre généralité et spécificité. En effet, elle est invariante par rapport à la vitesse de la trajectoire, mais dépend fortement du flux continu de la trajectoire. Son avantage principal par rapport à d'autres distances de la littérature (e.g. Hausdorff) réside dans sa capacité à évaluer la similarité en considérant à la fois tous les points constituant les courbes ainsi que la morphologie des chemins. La distance de Fréchet entre la trajectoire A et B peut être décrite de manière informelle comme la longueur de la laisse la plus courte permettant à une personne sur un trajet A de promener un chien sur un trajet B (sans faire marche arrière).

Dans sa version continue, la distance de Fréchet peut être donnée par la formule :

$$F(A, B) = \inf_{\alpha, \beta} \max_{t \in [0,1]} d(A(\alpha(t)), B(\beta(t)))$$

où A et B sont des courbes sur un espace métrique (distance d), et où $\alpha$ et $\beta$ représentent différentes paramétrisations de courbes.

Dans le cas discret, les deux chemins sont représentés par deux séquences P et Q de n points en 2 dimensions et le déplacement sur les séquences se fait en sautant d'un point à l'autre.

Toutefois, ce calcul est très consommateur en temps, en besoin de ressources informatiques (processeurs et mémoire), très dépendant de la taille des trajectoires et pas adapté pour traiter des volumes importants de données (par ex. centaines de milliers, voire millions de trajectoires).

**Technique antérieure**

L'algorithme traitant le cas continu de la distance de Fréchet a une complexité en temps de calcul de $\mathcal{O}(n^2 \log n)$, alors que l'algorithme de la distance de Fréchet discrète permet d'obtenir une solution en temps quadratique $\mathcal{O}(n^2)$ en utilisant une approche de programmation dynamique. La distance de Fréchet discrète est une solution approximative permettant d'examiner seulement les positions des sommets au lieu de balayer l'ensemble des points des courbes polygonales. Bien qu'elle soit plus rapide que dans le cas continu, elle reste tout de même très couteuse en temps de calcul et en besoin informatique (processeur et mémoire).

Même s'il existe plusieurs pistes pour optimiser le calcul de la distance de Fréchet, il est fortement peu probable de trouver des algorithmes sous-quadratiques pour la distance de Fréchet. Les demandes de brevet CN115296288 A, CN107798346 A, et CN101770516 A proposent des méthodes de compression/segmentation/filtrage des courbes pour réduire le temps de calcul. Malgré les avancées faites, l'ensemble de méthodes proposent soit une diminution de la résolution des trajectoires, soit suggèrent des approches difficilement interprétables et moins génériques.

Le document : « Janit Anjaria, Hong Wei, Hao Li, Shlok Mishra, and Hanan Samet. 2021. TrajDistLearn: learning to compute distance between trajectories. In Proceedings of the 14th ACM SIGSPATIAL International Workshop on Computational Transportation Science (IWCTS '21). Association for Computing Machinery, New York, NY, USA, Article 4, 1-9 » propose une nouvelle approche par Deep Learning (apprentissage profond) permettant d'estimer les métriques de distances de similarité telle que la distance de Fréchet. Dans ce document, les trajectoires sont représentées sous forme d'images matricielles et d'images cartographiques. L'approche se base sur une architecture de réseau de neurones à deux dimensions (images) de type « siamois ». Même si cette approche permet de réduire considérablement le temps de calcul, l'approche à deux dimensions (sur la base d'images) est limitée par la résolution des images et les ressources informatiques (mémoire et processeur). En effet, l'apprentissage de cette approche peut être coûteux en temps de calcul et en utilisation de ressources informatiques. De plus, les images ont une taille, et cette dernière définit la résolution des trajectoires. Pour avoir une meilleure résolution, il faut privilégier des images de grande taille, or celle-ci est contrainte par l'empreinte mémoire et le temps de calcul. L'utilisation d'images de basse résolution risque alors d'introduire du bruit, rendant l'apprentissage moins efficace.

**Résumé de l'invention**

L'invention a pour but de déterminer la similarité entre deux trajets, de manière précise, rapide, sans nécessiter d'importants moyens informatiques, ni un apprentissage complexe. Pour cela l'invention concerne un procédé de détermination d'une similarité au moyen d'une distance de Fréchet entre deux trajets, dans lequel on construit un modèle de distance de Fréchet par apprentissage automatique mettant en œuvre une architecture siamoise de réseau de neurones convolutifs à une dimension. L'utilisation d'une unique dimension dans l'apprentissage automatique et dans l'utilisation du modèle de distance de Fréchet permet une rapidité de mise en œuvre, en limitant les ressources informatiques utilisées. L'invention permet notamment un facteur d'accélération des calculs d'un ordre de grandeur de 100. L'invention concerne en outre un procédé de détermination d'un mode de transport et un procédé de cartospondance mettant en œuvre un tel procédé de détermination d'une distance de Fréchet.

L'invention concerne un procédé de détermination d'une similarité entre au moins une paire de trajets parcourus, le procédé étant mis en œuvre à partir d'une pluralité de trajets d'apprentissage définis par des données de positionnement. Pour ce procédé, on met en œuvre les étapes suivantes :

a. On détermine, de manière analytique, des distances de Fréchet d'apprentissage pour chaque paire de trajets d'apprentissage au moyen desdites données de positionnement desdits trajets d'apprentissage ;
b. On discrétise lesdites données de positionnement desdits trajets d'apprentissage ;
c. On construit une base d'apprentissage qui comprend lesdites données discrétisées de positionnement desdits trajets d'apprentissage et lesdites distances de Fréchet d'apprentissage déterminées ;
d. On construit un modèle de distance de Fréchet au moyen d'une méthode d'apprentissage entraînée sur ladite base d'apprentissage, ledit modèle de distance de Fréchet associant une distance de Fréchet à des données de positionnement d'une paire de trajets, ladite méthode d'apprentissage mettant en œuvre une architecture siamoise d'un réseau de neurones convolutif à une dimension ;
e. On acquiert des données de positionnement d'au moins deux trajets parcourus ;
f. On discrétise lesdites données de positionnement acquises pour lesdits au moins deux trajets parcourus ; et
g. On détermine une similarité entre au moins une paire desdits trajets parcourus au moyen dudit modèle de distance de Fréchet et desdites données de positionnement desdits trajets parcourus, ladite similarité étant ladite distance de Fréchet déterminée par ledit modèle de distance de Fréchet.

Selon un mode de réalisation, on détermine lesdites distances de Fréchet d'apprentissage de manière discrète.

Conformément à une mise en œuvre, ledit réseau de neurones convolutif comprend au moins une couche de convolution, au moins une fonction d'activation, au moins une couche de max pooling et au moins une couche entièrement connectée.

Selon un aspect, ladite méthode d'apprentissage automatique optimise une erreur quadratique moyenne entre ladite distance de Fréchet d'apprentissage et une distance de Fréchet déterminée par ledit modèle de distance de Fréchet.

Avantageusement, ladite architecture siamoise de ladite méthode d'apprentissage comporte une couche de concaténation des deux sorties dudit réseau de neurones convolutif à une dimension et au moins un filtre linéaire.

De manière avantageuse, on acquiert lesdites données de positionnement desdits trajets parcourus, ou éventuellement desdits trajets d'apprentissage, à partir de mesures au moyen d'un dispositif de géolocalisation, ou de mesures de données de connexion à un réseau de téléphonie.

Selon une option de réalisation, le procédé comprend en outre une étape de prétraitement desdites données de positionnement.

Conformément à un mode de réalisation, on discrétise lesdites données de positionnement desdits trajets parcourus et desdits trajets d'apprentissage en un nombre de points compris entre 5 et 100, et préférentiellement entre 10 et 50.

De plus, l'invention concerne un procédé de détermination d'un mode de transport d'un premier trajet pour lequel le mode de transport n'est pas connu, dans lequel on met en œuvre les étapes suivantes :

a. On détermine au moins une similarité entre ledit premier trajet et un deuxième trajet pour lequel on connait le mode de transport au moyen du procédé de détermination d'une similarité selon l'une des caractéristiques précédentes ; et
b. Si ladite similarité déterminée est inférieure à un seuil prédéterminé, on attribue ledit mode de transport dudit deuxième trajet audit premier trajet.

En outre, l'invention concerne un procédé de cartospondance sur une représentation d'un réseau de transport d'un premier trajet non positionné sur le réseau de transport, ladite représentation d'un réseau de transport comprenant une pluralité de brins, caractérisé en ce qu'on met en œuvre les étapes suivantes :

a. On détermine une similarité entre ledit premier trajet t au moins brin dudit réseau de transport au moyen du procédé de détermination de la similarité selon l'une des caractéristiques précédentes ; et
b. Si, pour au moins un brin dudit réseau de transport, similarité déterminée est inférieure à un seuil prédéterminé, on détermine que ledit premier trajet a parcouru ledit brin.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre les étapes du procédé de détermination de la distance de Fréchet selon un mode de réalisation de l'invention.

La figure 2 illustre les étapes du procédé de détermination d'un mode de transport selon un mode de réalisation de l'invention.

La figure 3 illustre les étapes du procédé de cartospondance d'un trajet sur un réseau de transport selon un mode de réalisation de l'invention.

La figure 4 illustre la construction d'un réseau de neurones convolutif selon un mode de réalisation de l'invention.

La figure 5 illustre l'architecture d'un réseau siamois selon un mode de réalisation de l'invention.

La figure 6 illustre, pour un exemple, une comparaison du temps de calcul de la distance de Fréchet par une méthode de l'art antérieur, et par le procédé selon un mode de réalisation de l'invention.

La figure 7 illustre, quatre exemples de trajets entre une zone de départ et une zone d'arrivée.

La figure 8 illustre, pour un autre exemple, une comparaison de la distance de Fréchet exacte et de la distance de Fréchet déterminée par le procédé selon un mode de réalisation de l'invention.

## Description des modes de réalisation

La présente invention concerne un procédé de détermination d'une similarité entre deux trajets parcourus., notamment en vue de déterminer un mode de transport, de réaliser un procédé de cartospondance, de contrôler un véhicule autonome, ou un robot autonome, d'un procédé de covoiturage, d'un procédé de partage de véhicule, etc.. Dans la présente demande, un trajet parcouru est un déplacement parcouru par un véhicule, entre une origine (départ) et une destination (arrivée), le trajet parcouru étant défini par sa trajectoire entre l'origine et la destination. Pour certains modes de réalisation (notamment pour l'application de la distance de Fréchet à un procédé de cartospondance), le terme « trajet parcouru » peut désigner un ou plusieurs brins d'une représentation d'un réseau de transport, par exemple un graphe routier.

Pour le procédé selon l'invention, la similarité est déterminée par la distance de Fréchet. Ainsi, l'invention est un procédé de détermination d'une similarité entre deux trajets parcours au moyen d'une distance de Fréchet.

Le procédé selon l'invention peut être mis en œuvre pour tout type de véhicules : bicyclette, véhicule automobile, deux-roues motorisé, bateau, aéroglisseur, trottinette, etc. ainsi que les déplacements piétons. Toutefois, le procédé selon l'invention est particulièrement adapté aux véhicules motorisés, tels que les véhicules automobiles, poids lourds, bus, deux-roues motorisés, etc.

Le procédé est mis en œuvre à partir d'une pluralité de trajets d'apprentissage. Il s'agit de trajets permettant de construire le modèle de distance de Fréchet. Cette construction sera détaillée dans la suite de la description. Les trajets d'apprentissage correspondent à la trajectoire d'un véhicule et sont définis par des points de positionnement (c'est-à-dire la localisation dans l'espace de points appartenant à la trajectoire/au trajet). Ces points de positionnement peuvent être acquis au moyen d'un système de géolocalisation, par exemple GPS pour « Global Positioning System » pouvant être traduit par système de positionnement global, ou le système Galileo, ou tout système analogue. Le système de géolocalisation peut notamment être inclus dans un téléphone intelligent ou un objet connecté. Alternativement, les points de positionnement peuvent être acquis à partir de données de connexion à un réseau de téléphonie. Il peut s'agir notamment de l'emplacement des antennes sur lesquelles un téléphone mobile s'est connecté lors du trajet. Pour ce type de données, les coordonnées géographiques enregistrées ne correspondent pas aux positions réelles d'un utilisateur mais plutôt à celles des antennes auxquelles son téléphone mobile a été connecté lors d'un événement téléphonique (appel, sms, connexion internet). Ces trajets peuvent aussi contenir des artéfacts comme des phénomènes d'écho entre antennes quand le téléphone se connecte à plusieurs antennes en même temps. A titre d'exemple non limitatif, le nombre de trajets d'apprentissage peut être supérieur à 5000, voire supérieur à 10000 en fonction de la précision des points de fonctionnement des trajets d'apprentissage. Cette gamme permet un bon compromis entre la précision du modèle de distance de Fréchet et le temps de calcul.

Le procédé met en œuvre les étapes suivantes :

1. Détermination de distances de Fréchet d'apprentissage
2. Discrétisation des données de positionnement des trajets d'apprentissage
3. Construction d'une base d'apprentissage
4. Construction du modèle de distance de Fréchet
5. Acquisition de trajets parcourus
6. Discrétisation des données de positionnement des trajets parcours
7. Détermination de la similarité (distance de Fréchet)

Ces étapes seront détaillées dans la suite de la description. Les étapes d'apprentissage 1 à 4 peuvent être mises en œuvre une seule fois, au préalable. Les étapes 5 à 7 sont réalisées en ligne, et peuvent être répétées pour chaque nouveau trajet parcouru. Ces étapes peuvent être mises en œuvre par des moyens informatiques, notamment un ordinateur ou un serveur, comprenant au moins un processeur et une mémoire informatique.

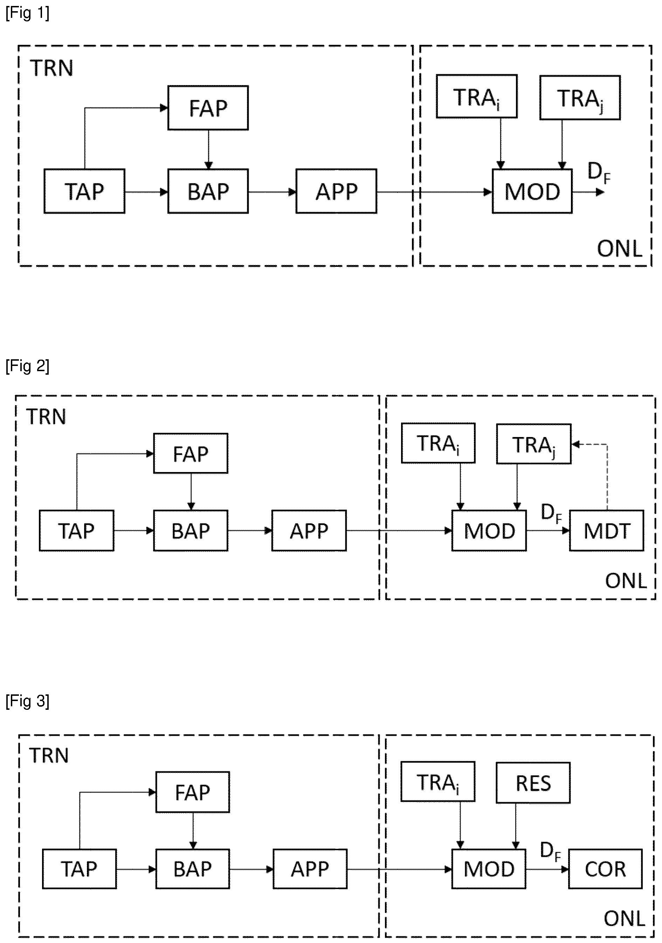

La figure 1 illustre, schématiquement et de manière non limitative, les étapes du procédé selon un mode de réalisation de l'invention. Pour la phase d'apprentissage TRN, on utilise des trajets d'apprentissage TAP, pour chaque paire de trajets d'apprentissage, on détermine, analytiquement, des distances de Fréchet d'apprentissage FAP. On construit alors une base d'apprentissage BAP, à partir de laquelle on met en œuvre une méthode d'apprentissage APP pour construire un modèle de distance de Fréchet. Ensuite, en ligne ONL, on acquiert au moins deux trajets $TRA_i$ et $TRA_j$ et on applique le modèle de distance de Fréchet à ces trajets pour déterminer la distance de Fréchet $D_F$.

## 1. Détermination de distances de Fréchet d'apprentissage

Lors de cette étape, on détermine, de manière analytique, des distances de Fréchet d'apprentissage pour chaque paire de trajets d'apprentissage, au moyen des données de positionnement. En d'autres termes, on détermine les distances de Fréchet d'apprentissage par application de l'équation mathématique de la distance de Fréchet décrite ci-dessus.

Conformément à une mise en œuvre de l'invention, le procédé peut comporter une étape de prétraitement des données de positionnement, par exemple par filtrage, suppression des valeurs aberrantes, etc. Ainsi, on peut limiter le bruit, et améliorer la précision de l'apprentissage. Cette étape est particulièrement utile pour le mode de réalisation dans lequel les données de positionnement sont des données de connexion à un réseau de téléphonie.

Selon un mode de réalisation de l'invention, on peut déterminer les distances de Fréchet d'apprentissage de manière discrète. A titre d'exemple, on peut appliquer les étapes décrites ci-dessous :

On considère deux trajets P et Q représentés par un ensemble ordonné de points $n$ et $m$ dans un espace métrique ($V$, $d$) muni d'une métrique $d$. On définit les séquences correspondantes aux points composant $P$ et $Q$ par $\sigma(P) = (p_1, \ldots \ldots, p_n)$ et $\sigma(Q) = (q_1, \ldots \ldots, q_m)$.

Dans l'espace $\sigma(P) \times \sigma(Q)$, on définit la séquence de couplage $C(P, Q)$ des paires de points uniques de P et Q :

$$C(P, Q) \equiv (p_{a_1}, q_{b_1}), (p_{a_2}, q_{b_2}), \ldots \ldots, (p_{a_L}, q_{b_L})$$

Le nombre L de paires de points uniques entre P et Q est obtenu en respectant les conditions (exemple dans figure 1) :

(1) Les premières et dernières positions sont liées ($a_1 = b_1 = 1$) et ($a_L = n$, $b_L = m$).

(2) Les seuls déplacements autorisés sont ceux vers l'avant (pas de retour en arrière possible) i.e., au moins un point sur un trajet doit être avancé jusqu'à son point successif (pour toute paire de points) ; ($a_{i+1} = a_i$ ou $a_{i+1} = a_{i+1}$) et ($b_{i+1} = b_i$ ou $b_{i+1} = b_{i+1}$).

Pour une séquence de couplage C donnée, la plus grande distance parmi les paires de points ($p_{a_i}$, $q_{b_i}$) définit la distance de couplage :

$$\|C\| = \max_{i=1,\ldots,L} d(p_{a_i}, q_{b_i})$$

Dans l'espace de toutes les séquences de couplage possibles, $\Omega_{P,Q}$, la distance de Fréchet discrète entre P et Q est la distance minimale parmi toutes les distances dans $\Omega_{P,Q}$ :

$$D_{\text{Fréchet}}(P, Q) = \min_{C \in \Omega_{P,Q}} \|C\|$$

Conformément à une mise en œuvre de l'invention, on peut déterminer la distance de Fréchet d'apprentissage par programmation dynamique.

## 2. Discrétisation des trajets d'apprentissage

Lors de cette étape, on discrétise les données de positionnement des trajets d'apprentissage, en une dimension. L'utilisation d'une discrétisation, donc d'une unique dimension, pour les trajets d'apprentissage permet l'utilisation d'une méthode d'apprentissage à une dimension qui permet de construire et d'utiliser le modèle de distance de Fréchet plus rapidement, tout en limitant les ressources informatiques nécessaires, telles que la mémoire et les processeurs. A l'inverse, dans la méthode décrite dans le document « Janit Anjaria, Hong Wei, Hao Li, Shlok Mishra, and Hanan Samet. 2021. TrajDistLearn: learning to compute distance between trajectories. In Proceedings of the 14th ACM SIGSPATIAL International Workshop on Computational Transportation Science (IWCTS '21). Association for Computing Machinery, New York, NY, USA, Article 4, 1-9 », les trajets sont représentés par des images des trajectoires à deux dimensions.

Conformément à une mise en œuvre de l'invention, les trajets d'apprentissage peuvent être discrétisés en un nombre de points compris entre 5 et 100, et préférentiellement entre 10 et 50. Ainsi, on obtient un bon compris entre précision du modèle de distance de Fréchet, temps de calcul et moyens informatiques nécessaires.

A titre d'exemple, chaque trajet d'apprentissage discrétisé peut prendre la forme suivante :
$Tra_d = (X_1 X_2 \ldots X_{N-1} X_N)$ avec $Tra_d$ le trajet discrétisé, N le nombre de points de la discrétisation, $X_i$ les coordonnées du

ième point de la discrétisation.

### 3. Construction de la base d'apprentissage

Lors de cette étape, on construit une base d'apprentissage qui comprend les données de positionnement des trajets d'apprentissage discrétisés à l'étape 2, et les distances de Fréchet d'apprentissage déterminées à l'étape 1. Autrement dit, la base d'apprentissage comprend pour chaque paire de trajets d'apprentissage, des données de positionnement discrétisées et la distance de Fréchet d'apprentissage obtenue analytiquement.

### 4. Construction du modèle de distance de Fréchet

Lors de cette étape, on construit un modèle de distance de Fréchet, au moyen d'une méthode d'apprentissage automatique, entrainée sur la base d'apprentissage construite à l'étape 3. Le modèle de distance de Fréchet associe une distance de Fréchet à des données de positionnement discrétisées d'une paire de trajets. En d'autres termes, le modèle de distance de Fréchet a pour entrée des données de positionnement discrétisées d'une paire de trajets et a pour sortie une distance de Fréchet.

Selon l'invention, la méthode d'apprentissage automatique met en œuvre une architecture siamoise de réseau de neurones convolutif à une dimension. L'architecture siamoise est appelée également réseau neuronal siamois, ou réseau neuronal jumeau. Cette architecture est un réseau neuronal artificiel qui utilise les mêmes poids tout en travaillant en tandem sur deux entrées différentes pour calculer des sorties comparables. Autrement dit, l'architecture siamoise comprend l'application du même réseau de neurones convolutif à une dimension à chaque trajet, puis une concaténation des sorties de ce réseau de neurones convolutif permet de déterminer la distance de Fréchet.

Selon un aspect de l'invention, le réseau de neurones convolutif peut comprendre au moins une couche de convolution qui permet d'extraire des caractéristiques particulières, au moins une couche d'activation, au moins une couche de max-pooling (couche permettant le souséchantillonnage) pour réduire la dimension spatiale, et au moins une couche entièrement connectée (de l'anglais « fully connected ») formant un filtre linéaire. De préférence, le réseau de neurones convolutif peut comprendre une pluralité de couches de convolution. Dans ce cas, une séquence formée de la couche de convolution, la couche d'activation et la couche de max-pooling peut être répétée pour chaque couche de convolution.

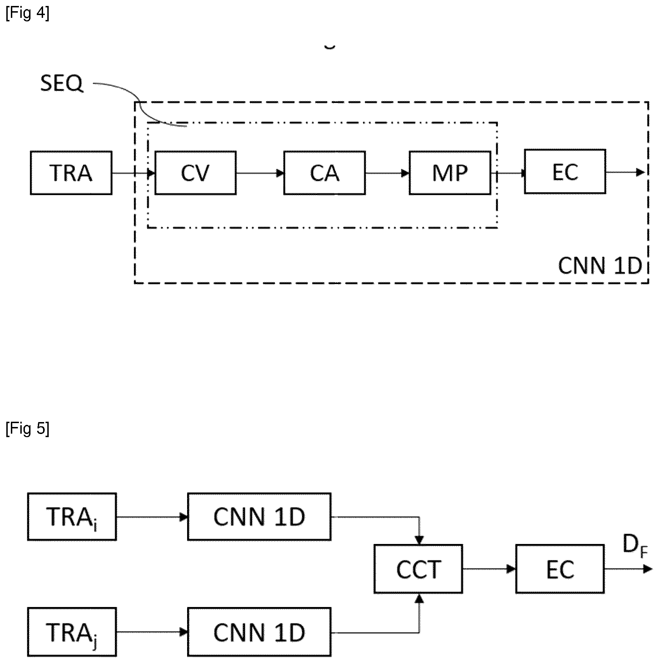

La figure 4 illustre, schématiquement et de manière non limitative, une conception d'un réseau de neurones convolutif à une dimension selon un mode de réalisation. Le réseau de neurones convolutif à une dimension CNN 1D a pour entrée les données discrétisées d'un trajet TRA et en sortie des caractéristiques particulières de ce trajet. Le réseau de neurones convolutif à une dimension CNN 1D comprend au moins une séquence de convolution SEQ et une couche entièrement connectée EC. La séquence de convolution SEQ comprend une couche de convolution, une couche d'activation et une couche de max-pooling.

Selon des variantes non représentées, le réseau de neurones convolutif à une dimension peut comprendre une pluralité de séquences de convolution et/ou une pluralité de couches entièrement connectée.

Conformément à une mise en œuvre de l'invention, l'architecture siamoise peut comporter pour chaque trajet un réseau de neurones convolutif à une dimension, puis une couche de concaténation, et au moins une couche entièrement connectée pour former un filtre linéaire. En outre, lorsque l'architecture siamoise comporte plusieurs couches entièrement connectées, cette architecture siamoise peut comprendre une couche d'activation entre deux couches entièrement connectées. Une couche linéaire augmente la capacité de représentation du réseau de neurones (en trouvant des combinaisons complexes de caractéristiques extraites par les couches de convolution). Le fait d'ajouter une fonction d'activation non-lineaire à la sortie des filtres linéaires permet d'introduire la non linéarité dans cette représentation. Le fait d'ajouter deux couches entièrement connectées suivies d'une couche d'activation permet d'avoir des combinaisons linéaires et des combinaisons non linéaires deux fois plus complexes.

La dernière couche entièrement connectée de l'architecture siamoise permet d'obtenir une seule sortie scalaire, en l'occurrence la distance de Fréchet estimée.

La figure 5 illustre, schématiquement et de manière non limitative, une architecture siamoise selon une mise en œuvre de l'invention. Un réseau de neurones convolutif à une dimension CNN 1D est appliqué à un premier trajet $TRA_i$. Le même réseau de neurones convolutif à une dimension CNN 1D est appliqué à un deuxième trajet $TRA_j$. Ensuite, les sorties des réseaux de neurones convolutifs CNN 1D sont concaténées CCT, puis on met en œuvre au moins une couche entièrement connectée EC pour déterminer la distance de Fréchet $D_F$.

Selon des variantes non représentées, l'architecture siamoise peut comprendre au moins deux couches entièrement connectées, et une couche d'activation entre chaque paire de couches entièrement connectées.

Selon un mode de réalisation de l'invention, la méthode d'apprentissage automatique peut optimiser une erreur quadratique moyenne entre la distance de Fréchet d'apprentissage et la distance de Fréchet issue du modèle de distance de Fréchet construit. Cette erreur quadratique moyenne est sensible aux valeurs aberrantes. En variante, l'erreur moyenne absolue peut être utilisée pour la méthode d'apprentissage automatique.

Selon un mode de réalisation, les trajets d'apprentissage de la base d'apprentissage peuvent être segmentés par batch (appelé aussi groupe ou lot). Cette segmentation par batch permet de parcourir de manière plus rapide la base tout en relevant à chaque fois des trajets d'apprentissage très différents. De plus, cette segmentation permet d'éviter les problèmes liés à un manque d'espace de stockage informatique.

Selon une option de réalisation, il peut être prévu plusieurs époques (de l'anglais « epoch » qui désigne le passage complet du jeu de données de la base d'apprentissage) pour la méthode d'entraînement. Le nombre d'époques reflète le nombre de passages de l'algorithme lors de la phase d'entraînement. De préférence, l'époque peut être composée d'une agrégation de plusieurs batchs de données et d'itérations. Selon un exemple non limitatif, l'algorithme d'optimisation mis en œuvre peut être l'algorithme du gradient stochastique (de l'anglais « stochastic gradient descent » SGD) appelé également descente graduelle, qui est un algorithme itératif reposant sur le calcul d'un gradient d'erreur. D'autres algorithmes similaires peuvent être mis en œuvre.

### 5. Acquisition des trajets parcourus

Lors de cette étape, on acquiert des données de positionnement d'au moins deux trajets parcourus par un véhicule. En d'autres termes, on obtient des données de positionnement d'au moins deux trajets parcourus, pour lesquels on souhaite déterminer la distance de Fréchet les séparant. Les trajets parcourus sont définis par la trajectoire d'un véhicule, caractérisés par des points de positionnement (c'est-à-dire la localisation dans l'espace). Ces points de positionnement peuvent être acquis au moyen d'un système de géolocalisation, par exemple GPS pour « Global Positioning System » pouvant être traduit par système de positionnement global, ou le système Galileo, ou tout système analogue. Le système de géolocalisation peut être inclus dans un téléphone intelligent, dans un véhicule, ou un objet connecté. Alternativement, les points de positionnement peuvent être acquis à partir de données de connexion à un réseau de téléphonie. Il peut s'agir notamment de l'emplacement des antennes sur lesquelles un téléphone mobile s'est connecté lors du trajet. Pour ce type de données, les coordonnées géographiques enregistrées ne correspondent pas aux positions réelles d'un utilisateur mais plutôt à celles des antennes auxquelles son téléphone mobile a été connecté lors d'un événement téléphonique (appel, sms, connexion internet). Ces trajets peuvent aussi contenir des artéfacts comme des phénomènes d'écho entre antennes quand le téléphone se connecte à plusieurs antennes en même temps. Pour ces exemples, l'acquisition des trajets parcourus correspond à une étape de mesure de la localisation de points appartenant au déplacement du véhicule.

### 6. Discrétisation des trajets parcourus

Lors de cette étape, on discrétise les données de positionnement des trajets parcourus, en une dimension. L'utilisation d'une discrétisation, donc d'une unique dimension, pour les trajets parcourus permet d'utiliser le modèle de distance de Fréchet plus rapidement, tout en limitant les ressources informatiques nécessaires, telles que la mémoire et les processeurs. Par cette discrétisation, chaque trajet parcouru est constitué d'un nombre de points de dimensions deux ou trois. A l'inverse, dans la méthode décrite dans le document « Janit Anjaria, Hong Wei, Hao Li, Shlok Mishra, and Hanan Samet. 2021. TrajDistLearn: learning to compute distance between trajectories. In Proceedings of the 14th ACM SIGSPATIAL International Workshop on Computational Transportation Science (IWCTS '21). Association for Computing Machinery, New York, NY, USA, Article 4, 1-9 », les trajets sont représentés par des images des trajectoires à deux dimensions.

Conformément à une mise en œuvre de l'invention, les trajets parcourus peuvent être discrétisés en un nombre de points compris entre 5 et 100, et préférentiellement entre 10 et 50. Ainsi, on obtient un bon compris entre précision du modèle de distance de Fréchet, temps de calcul et moyens informatiques nécessaires.

A titre d'exemple, chaque trajet parcouru discrétisé peut prendre la forme suivante :

$Tra_d = (X_1\ X_2\ ...\ X_{N-1}\ X_N)$ avec $Tra_d$ le trajet discrétisé, N le nombre de points de la discrétisation, $X_i$ les coordonnées du ième point de la discrétisation.

### 7. Détermination de la similarité (distance de Fréchet)

Lors de cette étape, on détermine la distance de Fréchet et donc la similarité entre les deux trajets parcourus discrétisés à l'étape 6 au moyen du modèle de distance de Fréchet construit à l'étape 4. En d'autres termes, on applique le modèle de distance de Fréchet aux données de positionnement discrétisées des trajets parcours, et on obtient la distance de Fréchet entre les deux trajets parcourus. Grâce au modèle, la distance de Fréchet et donc la similarité peut être obtenue rapidement sans nécessité des moyens informatiques important (mémoire, processeur).

Pour le mode de réalisation pour lequel on acquiert plus de deux trajets parcourus à l'étape 5, lors de cette étape, on peut déterminer une distance de Fréchet entre chaque paire de trajets parcours acquis et discrétisés. Le procédé selon l'invention est particulièrement intéressant pour ce mode de réalisation, en raison du temps de calcul réduit et des besoins limités en moyens informatiques (mémoire et processeur).

De plus, l'invention concerne un procédé de détermination d'un mode de transport d'un premier trajet pour lequel on ne connaît pas le mode de transport. Pour ce procédé, on peut mettre en œuvre les étapes suivantes :

a. On détermine au moins similarité (i. e. une distance de Fréchet) entre le premier trajet et un deuxième trajet pour lequel on connait le mode de transport au moyen du procédé de détermination d'une similarité (i.e. d'une distance de Fréchet) selon l'une quelconque des variantes décrites précédemment ; et

b. Si la similarité déterminée est inférieure à un seuil prédéterminé, on attribue le mode de transport du deuxième trajet au premier trajet (autrement dit le mode de transport du premier trajet à caractériser est celui du deuxième trajet).

Toutefois, si la distance de Fréchet déterminée est supérieure au seuil prédéterminé, on n'attribue aucun mode de transport au premier trajet. Dans ce cas, on peut répéter les étapes a et b à partir d'un autre deuxième trajet.

En variante, l'étape a peut être réalisée pour plusieurs deuxièmes trajets : on calcule une distance de Fréchet entre le premier trajet et chaque deuxième trajet. Pour ce mode de réalisation, lors de l'étape b, on peut attribuer le mode de transport du deuxième trajet qui minimise la similarité (la distance de Fréchet) au premier trajet (de préférence si cette distance de Fréchet est inférieure au seuil prédéterminé).

Ainsi, le procédé selon l'invention permet de déterminer rapidement et sans besoin informatique important un mode de transport pour un premier trajet à caractériser.

La figure 2 illustre, schématiquement et de manière non limitative, les étapes du procédé de détermination d'un mode de transport selon un mode de réalisation. Les étapes identiques au procédé de la figure 1 ne sont pas redétaillées. Dans ce cas, le premier trajet est le trajet TRAi et le deuxième trajet est le trajet TRAj. Le modèle de distance de Fréchet MOD détermine la distance de Fréchet DF entre le trajet à caractériser et le trajet caractérisé, si cette distance de Fréchet est inférieure à un seuil prédéterminé, alors on détermine un mode de transport MDT pour le premier trajet TRAi. Eventuellement, si la distance de Fréchet est supérieure au seuil prédéterminé, on peut répéter les étapes avec un autre deuxième trajet TRAj.

L'invention concerne également un procédé de cartospondance (de l'anglais « map matching » ou correspondance avec une carte) d'un premier trajet avec une représentation d'un réseau de transport, notamment de réseau routier. Ce procédé vise à projeter au moins un trajet sur une référence cartographique pour déterminer les axes de transport empruntés par le véhicule, par exemple sur un graphe routier, un graphe de voies ferrées, etc. La représentation de réseau de transport comporte une pluralité de brins, qui est une subdivision élémentaire du réseau de transport entre deux nœuds consécutifs du réseau de transport. Par exemple, un brin du réseau routier peut être une route entre deux intersections consécutives, entre deux signalisations consécutives, entre une intersection et une signalisation, ou une partie d'autoroute entre deux sorties consécutives, etc. Ainsi, on dispose d'un découpage fin du réseau routier, et d'un modèle qui est adapté au réseau routier sans données microscopiques. Le réseau routier peut être représenté par un graphe, appelé graphe routier. Le graphe routier est composé d'un ensemble d'arêtes (brins appelés aussi arcs) et de nœuds, les nœuds pouvant représenter les intersections, et les arêtes les portions de routes entre les intersections. Le graphe routier peut être obtenu à partir d'un service en ligne (« webservice ») de cartographie, par exemple Here ™ (Here Apps LLC, Pays-Bas) qui fournit les arêtes du graphe sous forme d'objets géométriques purs. De préférence, le graphe routier est cohérent avec le réseau routier (toutes les connexions physiques entre deux routes, et uniquement celles-ci, sont représentées par les nœuds du graphe), aussi invariant que possible dans le temps. De plus, le graphe routier peut être simplifié, en ne prenant pas en compte les portions de routes telles que les impasses, les chemins dans les parcs ou les pistes cyclables, en fonction du type du véhicule considéré (par exemple pour le mode de réalisation des véhicules automobiles, les pistes cyclables peuvent ne pas être prises en compte).

Pour ce procédé, on peut mettre en œuvre les étapes suivantes :

a. On détermine une similarité (i.e. distance de Fréchet) entre le premier à positionner sur une représentation d'un réseau de transport et au moins un brin du réseau de transport, au moyen du procédé de détermination de la similarité (distance de Fréchet) selon l'une quelconque des variantes décrites précédemment, pour lequel on considère un des deux trajets parcourus comme un brin de la représentation du réseau de transport ; et
b. Si, pour au moins un brin du réseau de transport, la distance de Fréchet déterminée est inférieure à un seuil prédéterminé, on détermine que ledit premier trajet a parcouru ledit brin.

Toutefois, si la distance de Fréchet déterminée est supérieure au seuil prédéterminé, on détermine que le brin considéré n'est pas traversé par le premier trajet.

En répétant ces étapes pour plusieurs brins du réseau de transport, on peut déterminer plusieurs voire tous les brins traversés par le premier trajet.

Le procédé de détermination de la similarité selon l'invention peut en outre être utilisé dans un procédé de contrôle d'un véhicule autonome, ou d'un robot autonome, d'un procédé de covoiturage, d'un procédé de partage de véhicule. En outre, la distance de Fréchet obtenue par le procédé selon l'invention peut être utilisée pour un procédé de reconnaissance de formes et d'objets, un procédé de surveillance/contrôle d'un système biomécanique, un procédé de screening en biologie pour la reconnaissance de similarité entre structures moléculaires, un procédé contrôle de signaux, par exemple pour la correspondance de signaux musicaux, etc.

**Exemples**

Les caractéristiques et avantages du procédé selon l'invention apparaîtront plus clairement à la lecture de l'exemple d'application ci-après.

Pour le premier exemple, afin d'évaluer le gain en temps de calcul du procédé selon l'invention, on construit des matrices de distances de dimensions différentes à partir de la distance de Fréchet discrète.

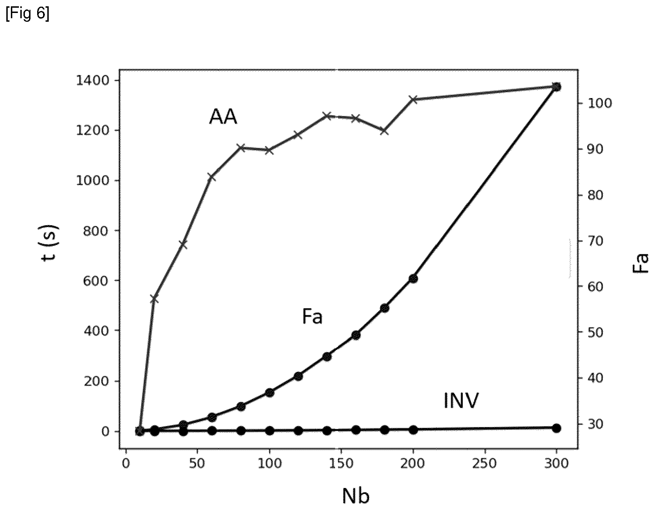

La dimension de la matrice $n^2$ est fixée par le nombre de trajets n. Les matrices de distances renseignent sur la similitude entre les trajets où chaque valeur $M_{i,j} = D_{\text{Fréchet}}(T_i, T_j)$ correspond à la distance de Fréchet discrète entre les trajectoires $T_i$ et $T_j$. Pour cet exemple, on détermine le temps de calcul nécessaire pour déterminer la distance de Fréchet en fonction du nombre de trajets. La figure 6 illustre une courbe du temps de calcul t en s pour fonction du nombre de trajets Nb. La courbe AA indique le temps de calcul utilisé pour la méthode de détermination de la distance de Fréchet selon l'art antérieur par programmation dynamique, et la courbe INV indique le temps de calcul utilisé pour le procédé selon l'invention. La figure 6 illustre également le facteur d'accélération Fa en fonction du nombre de trajets Nb. Le temps de calcul du procédé selon l'invention est très peu sensible à la taille de la matrice de distance alors que celui obtenu par la méthode classique AA augmente de manière quadratique en proportion avec le nombre de trajets. Par exemple, on trouve pour 300 trajets :

$\Delta t_{\text{Fréchet,exacte}}$ ($n = 300$) = 1374 s et $\Delta t_{\text{Fréchet,approximée}}$ ($n = 300$) = 13 s. Soit un facteur d'accélération > 100.

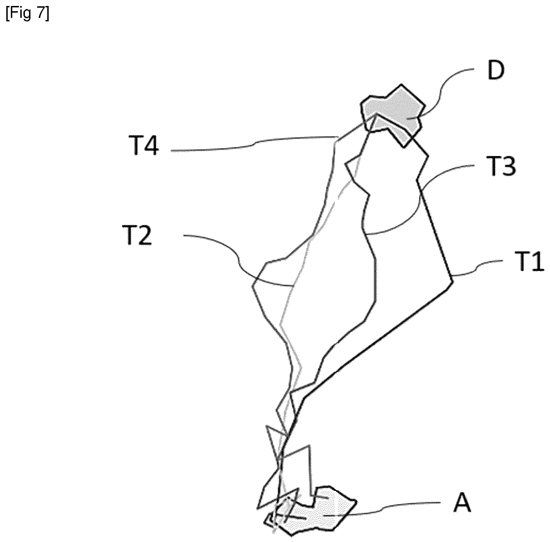

Pour le deuxième exemple, on considère quatre trajets entre une zone de départ et une zone d'arrivée. La figure 7 illustre, schématiquement, la zone de départ D, la zone d'arrivée et les quatre trajets T1 à T4. On détermine pour chaque couple de trajets la distance de Fréchet au moyen de la méthode classique selon l'art antérieur (programmation dynamique). Le tableau 1 présente ces distances de Fréchet :

[Table 1]

| D Fréchet | T1 | T2 | T3 | T4 |
|---|---|---|---|---|
| T1 | 0 | - | - | - |
| T2 | 2.21 | 0 | - | - |
| T3 | 1.95 | 0.95 | 0 | - |
| T4 | 2.21 | 0.99 | 1.34 | 0 |

Puis, on détermine la distance de Fréchet au moyen du procédé selon un mode de réalisation de l'invention. Le tableau 2 présente ces distances de Fréchet :

[Table 1]

| D Fréchet | T1 | T2 | T3 | T4 |
|---|---|---|---|---|
| T1 | 0 | - | - | - |
| T2 | 2.34 | 0 | - | - |
| T3 | 2.12 | 0.82 | 0 | - |
| T4 | 2.15 | 0.95 | 1.01 | 0 |

On remarque que le procédé selon l'invention permet de préserver les valeurs minimales et maximales. De plus, les erreurs sont faibles : l'erreur absolue moyenne est de 0.11 et l'erreur quadratique moyenne est 0.02. Il en résulte que le procédé selon l'invention permet de déterminer précisément la distance de Fréchet.

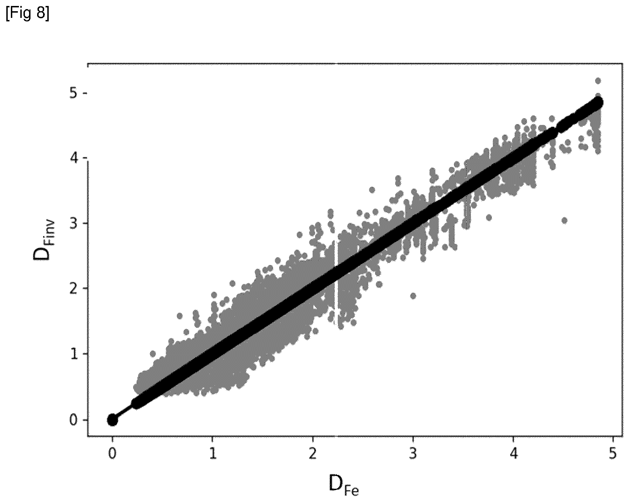

Pour un troisième exemple, on considère 160 trajets entre la même zone de départ et la même zone d'arrivée. On peut construire, pour cet exemple, la courbe de la figure 8 de la distance de Fréchet obtenue par le procédé selon l'invention $D_{\text{FINV}}$ en fonction de la $D_{\text{FE}}$ obtenue par la méthode de l'art antérieur. On remarque la bonne corrélation des résultats. Dans cette situation également, les erreurs sont faibles, l'erreur absolue moyenne est de 0.20 et l'erreur quadratique moyenne est 0.06. Ainsi, le procédé selon l'invention est robuste.

**Revendications**

1. Procédé de détermination d'une similarité entre au moins une paire de trajets ($TRA_i$, $TRA_j$) parcourus, le procédé étant mis en œuvre à partir d'une pluralité de trajets d'apprentissage (TAP) définis par des données de positionnement, **caractérisé en ce qu'**on met en œuvre les étapes suivantes :

   a. On détermine, de manière analytique, des distances de Fréchet d'apprentissage (FAP) pour chaque paire de trajets d'apprentissage (TAP) au moyen desdites données de positionnement desdits trajets d'apprentissage (TAP) ;
   b. On discrétise lesdites données de positionnement desdits trajets d'apprentissage (TAP) ;
   c. On construit une base d'apprentissage (BAP) qui comprend lesdites données discrétisées de positionnement desdits trajets d'apprentissage (TAP) et lesdites distances de Fréchet d'apprentissage (FAP) déterminées ;
   d. On construit un modèle de distance de Fréchet (MOD) au moyen d'une méthode d'apprentissage (APP) entraînée sur ladite base d'apprentissage (BAP), ledit modèle de distance de Fréchet (MOD) associant une distance de Fréchet à des données de positionnement d'une paire de trajets ($TRA_i$, $TRA_j$), ladite méthode d'apprentissage (APP) mettant en œuvre une architecture siamoise d'un réseau de neurones convolutif à une dimension (CNN 1 D) ;
   e. On acquiert des données de positionnement d'au moins deux trajets parcourus ($TRA_i$, $TRA_j$) ;
   f. On discrétise lesdites données de positionnement acquises pour lesdits au moins deux trajets parcourus ($TRA_i$, $TRA_j$) ; et
   g. On détermine une similarité entre au moins une paire desdits trajets parcourus ($TRA_i$, $TRA_j$) au moyen dudit modèle de distance de Fréchet (MOD) et desdites données de positionnement desdits trajets parcourus ($TRA_i$, $TRA_j$), ladite similarité étant ladite distance de Fréchet ($D_F$) déterminée par ledit modèle de distance de Fréchet.

2. Procédé de détermination d'une similarité selon la revendication 1, dans lequel on détermine lesdites distances de Fréchet d'apprentissage (FAP) de manière discrète.

3. Procédé de détermination d'une similarité selon l'une des revendications précédentes, dans lequel ledit réseau de neurones convolutif (CNN 1D) comprend au moins une couche de convolution (CV), au moins une fonction d'activation (CA), au moins une couche de max pooling (MP) et au moins une couche entièrement connectée (EC).

4. Procédé de détermination d'une similarité selon l'une des revendications précédentes, dans lequel ladite méthode d'apprentissage automatique optimise une erreur quadratique moyenne entre ladite distance de Fréchet d'apprentissage (FAP) et une distance de Fréchet déterminée par ledit modèle de distance de Fréchet.

5. Procédé de détermination d'une similarité selon l'une des revendications précédentes, dans lequel ladite architecture siamoise de ladite méthode d'apprentissage comporte une couche de concaténation (CCT) des deux sorties dudit réseau de neurones convolutif à une dimension (CNN 1D) et au moins un filtre linéaire (EC).

6. Procédé de détermination d'une similarité selon l'une des revendications précédentes, dans lequel on acquiert lesdites données de positionnement desdits trajets parcourus, ou éventuellement desdits trajets d'apprentissage, à partir de mesures au moyen d'un dispositif de géolocalisation, ou de mesures de données de connexion à un réseau de téléphonie.

7. Procédé de détermination d'une similarité selon l'une des revendications précédentes, dans lequel le procédé comprend en outre une étape de prétraitement desdites données de positionnement.

8. Procédé de détermination d'une similarité selon l'une des revendications précédentes, dans lequel on discrétise lesdites données de positionnement desdits trajets parcourus ($TRA_i$, $TRA_j$) et desdits trajets d'apprentissage (TAP) en un nombre de points compris entre 5 et 100, et préférentiellement entre 10 et 50.

9. Procédé de détermination d'un mode de transport d'un premier trajet pour lequel le mode de transport n'est pas connu, **caractérisé en ce qu'**on met en œuvre les étapes suivantes :

   a. On détermine au moins une similarité entre ledit premier trajet et un deuxième trajet pour lequel on connait le mode de transport au moyen du procédé de détermination d'une similarité selon l'une des revendications précédentes ; et

b. Si ladite similarité déterminée est inférieure à un seuil prédéterminé, on attribue ledit mode de transport (MDT) dudit deuxième trajet audit premier trajet.

**10.** Procédé de cartospondance sur une représentation d'un réseau de transport d'un premier trajet non positionné sur le réseau de transport, ladite représentation d'un réseau de transport comprenant une pluralité de brins, **caractérisé en ce qu'**on met en œuvre les étapes suivantes :

a. On détermine une similarité entre ledit premier trajet t au moins brin dudit réseau de transport au moyen du procédé de détermination de la similarité selon l'une des revendications 1 à 8 ;

b. Si, pour au moins un brin dudit réseau de transport, similarité déterminée est inférieure à un seuil prédéterminé, on détermine que ledit premier trajet a parcouru ledit brin (COR).

## Patentansprüche

**1.** Verfahren zur Bestimmung einer Ähnlichkeit zwischen mindestens einem Paar zurückgelegter Strecken ($TRA_i$, $TRA_j$) , wobei das Verfahren ausgehend von einer Mehrzahl von Lernstrecken (TAP) implementiert wird, die durch Positionierungsdaten definiert werden, **dadurch gekennzeichnet, dass** man die folgenden Schritte implementiert:

a. Man bestimmt, analytisch, Lern-Fréchet-Abstände (FAP) für jedes Paar von Lernstrecken (TAP) mittels der Positionierungsdaten der Lernstrecken (TAP);

b. Man diskretisiert die Positionierungsdaten der Lernstrecken (TAP);

c. Man erstellt eine Lerndatenbank (BAP), welche die diskretisierten Positionierungsdaten der Lernstrecken (TAP) und die bestimmten Lern-Fréchet-Abstände(FAP) umfasst;

d. Man erstellt ein Fréchet-Abstand-Modell (MOD) mittels einer mit der Lerndatenbank (BAP) trainierten Lernmethode (APP), wobei das Fréchet-Abstand-Modell (MOD) einen Fréchet-Abstand mit Positionierungsdaten eines Paars von Strecken ($TRA_i$, $TRA_j$) verknüpft, wobei die Lernmethode (APP) eine siamesische Architektur eines eindimensionalen faltenden neuronalen Netzwerks (CNN 1 D) implementiert;

e. Man erfasst Positionierungsdaten von mindestens zwei zurückgelegten Strecken ($TRA_i$, $TRA_j$);

f. Man diskretisiert die für die mindestens zwei zurückgelegten Strecken erfassten Positionierungsdaten ($TRA_i$, $TRA_j$); und

g. Man bestimmt eine Ähnlichkeit zwischen mindestens einem Paar der zurückgelegten Strecken ($TRA_i$, $TRA_j$) mittels des Fréchet-Abstand-Modells (MOD) und der Positionierungsdaten der zurückgelegten Strecken ($TRA_i$, $TRA_j$), wobei die Ähnlichkeit der durch das Fréchet-Abstand-Modell bestimmte Fréchet-Abstand ($D_F$) ist.

**2.** Verfahren zur Bestimmung einer Ähnlichkeit nach Anspruch 1, wobei man die Lern-Fréchet-Abstände(FAP) diskret bestimmt.

**3.** Verfahren zur Bestimmung einer Ähnlichkeit nach einem der vorhergehenden Ansprüche, wobei das faltende neuronale Netzwerk (CNN 1D) mindestens eine Faltungsschicht (CV), mindestens eine Aktivierungsfunktion (CA), mindestens eine Max-Pooling-Schicht (MP) und mindestens eine vollständig verbundene Schicht (EC) umfasst.

**4.** Verfahren zur Bestimmung einer Ähnlichkeit nach einem der vorhergehenden Ansprüche, wobei die maschinelle Lernmethode einen mittleren quadratischen Fehler zwischen dem Lern-Fréchet-Abstand (FAP) und einem durch das Fréchet-Abstand-Modell bestimmten Fréchet-Abstand optimiert.

**5.** Verfahren zur Bestimmung einer Ähnlichkeit nach einem der vorhergehenden Ansprüche, wobei die siamesische Architektur der Lernmethode eine Verkettungsschicht (CCT) der beiden Ausgänge des eindimensionalen faltenden neuronalen Netzes (CNN 1D) und mindestens einen linearen Filter (EC) beinhaltet.

**6.** Verfahren zur Bestimmung einer Ähnlichkeit nach einem der vorhergehenden Ansprüche, wobei man die Positionierungsdaten der zurückgelegten Strecken oder gegebenenfalls der Lernstrecken ausgehend von Messungen mittels einer Geolokalisierungsvorrichtung oder von Messungen von Verbindungsdaten mit einem Telefonnetz erfasst.

7. Verfahren zur Bestimmung einer Ähnlichkeit nach einem der vorhergehenden Ansprüche, wobei das Verfahren ferner einen Schritt zur Vorverarbeitung der Positionierungsdaten umfasst.

8. Verfahren zur Bestimmung einer Ähnlichkeit nach einem der vorhergehenden Ansprüche, wobei man die Positionierungsdaten der zurückgelegten Strecken (TRA$_i$, TRA$_j$) und der Lernstrecken (TAP) in eine Anzahl von Punkten zwischen 5 und 100 und bevorzugt zwischen 10 und 50 diskretisiert.

9. Verfahren zur Bestimmung einer Transportart einer ersten Strecke, für welche die Transportart nicht bekannt ist, **dadurch gekennzeichnet, dass** man die folgenden Schritte implementiert:

   a. Man bestimmt mindestens eine Ähnlichkeit zwischen der ersten Strecke und einer zweiten Strecke, für welche man die Transportart kennt, mithilfe des Verfahrens zur Bestimmung einer Ähnlichkeit nach einem der vorhergehenden Ansprüche; und
   b. Wenn die bestimmte Ähnlichkeit geringer als ein vorbestimmter Schwellenwert ist, weist man die Transportart (MDT) der zweiten Strecke der ersten Strecke zu.

10. Verfahren zum Kartenabgleich auf einer Darstellung eines Transportnetzes einer ersten Strecke, die auf dem Transportnetz nicht positioniert ist, wobei die Darstellung eines Transportnetzes eine Mehrzahl von Abschnitten umfasst, **dadurch gekennzeichnet, dass** man die folgenden Schritte implementiert:

    a. Man bestimmt eine Ähnlichkeit zwischen der ersten Strecke t mindestens Abschnitt des Transportnetzes mithilfe des Verfahrens zur Bestimmung der Ähnlichkeit nach einem der Ansprüche 1 bis 8;
    b. Wenn, für mindestens einen Abschnitt des Transportnetzes, bestimmte Ähnlichkeit geringer als ein vorbestimmter Schwellenwert ist, bestimmt man, dass die erste Strecke den Abschnitt (COR) zurückgelegt hat.


**Claims**

1. Method for determining a similarity between at least one pair of travelled journeys (TRA$_i$, TRA$_j$) , the method being implemented on the basis of a plurality of training journeys (TAP) which are defined by positioning data, **characterized in that** the following steps are implemented:

   a. training Fréchet distances (FAP) are determined analytically for each pair of training journeys (TAP) by means of said positioning data of said training journeys (TAP);
   b. said positioning data of said training journeys (TAP) are discretized;
   c. a training database (BAP) is constructed which comprises said discretized positioning data of said training journeys (TAP) and said determined training Fréchet distances (FAP);
   d. a Fréchet distance model (MOD) is constructed by means of a learning method (APP) trained on said training database (BAP), said Fréchet distance model (MOD) associating a Fréchet distance with positioning data of a pair of journeys (TRA$_i$, TRA$_j$) , said learning method (APP) implementing a Siamese architecture of a one-dimensional convolutional neural network (CNN 1D);
   e. positioning data of at least two travelled journeys (TRA$_i$, TRA$_j$) are acquired;
   f. said positioning data acquired for said at least two travelled journeys (TRA$_i$, TRA$_j$) are discretized; and
   g. a similarity between at one pair of said travelled journeys (TRA$_i$, TRA$_j$) is determined by means of said Fréchet distance model (MOD) and said positioning data of said travelled journeys (TRA$_i$, TRA$_j$) , said similarity being said Fréchet distance (D$_F$) determined by said Fréchet distance model.

2. Method for determining a similarity according to Claim 1, wherein said training Fréchet distances (FAP) are determined discretely.

3. Method for determining a similarity according to one of the preceding claims, wherein said convolutional neural network (CNN 1D) comprises at least one convolutional layer (CV), at least one activation function (CA), at least one max pooling layer (MP) and at least one fully connected layer (EC).

4. Method for determining a similarity according to one of the preceding claims, wherein said machine learning method optimizes a root mean square error between said training Fréchet distance (FAP) and a Fréchet distance determined by said Fréchet distance model.

5. Method for determining a similarity according to one of the preceding claims, wherein said Siamese architecture of said learning method comprises a concatenation layer (CCT) for concatenating the two outputs of said one-dimensional convolutional neural network (CNN 1D) and at least one linear filter (EC).

6. Method for determining a similarity according to one of the preceding claims, wherein said positioning data of said travelled journeys, or possibly of said training journeys, are acquired on the basis of measurements by means of a geolocation device, or of measurements of data on connection to a telephone network.

7. Method for determining a similarity according to one of the preceding claims, wherein the method further comprises a step of preprocessing said positioning data.

8. Method for determining a similarity according to one of the preceding claims, wherein said positioning data of said travelled journeys ($TRA_i$, $TRA_j$) and of said training journeys (TAP) are discretized into a number of points comprised between 5 and 100, and preferably between 10 and 50.

9. Method for determining a mode of transport of a first journey for which the mode of transport is not known, **characterized in that** the following steps are implemented:

   a. at least one similarity between said first journey and a second journey for which the mode of transport is known is determined by means of the method for determining a similarity according to one of the preceding claims; and
   b. if said determined similarity is below a predetermined threshold, said mode of transport (MDT) of said second journey is assigned to said first journey.

10. Method for mapmatching, on a representation of a transport network, a first journey not positioned on the transport network, said representation of a transport network comprising a plurality of strands, **characterized in that** the following steps are implemented:

   a. a similarity between said first journey and at least one strand of said transport network is determined by means of the method for determining the similarity according to one of Claims 1 to 8;
   b. if, for at least one strand of said transport network, the determined similarity is below a predetermined threshold, it is determined that said first journey has travelled said strand (COR).

[Fig 1]

[Fig 2]

[Fig 3]

[Fig 4]

[Fig 5]

[Fig 6]

[Fig 7]

[Fig 8]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 115296288 A
- CN 107798346 A

- CN 101770516 A


**Littérature non-brevet citée dans la description**

- TrajDistLearn: learning to compute distance between trajectories. **JANIT ANJARIA** ; **HONG WEI** ; **HAO LI** ; **SHLOK MISHRA** ; **HANAN SAMET**. Proceedings of the 14th ACM SIGSPATIAL International Workshop on Computational Transportation Science (IWCTS '21). Association for Computing Machinery, 2021, 1-9

- TrajDistLearn: learning to compute distance between trajectories.. **JANIT ANJARIA** ; **HONG WEI** ; **HAO LI** ; **SHLOK MISHRA** ; **HANAN SAMET**. Proceedings of the 14th ACM SIGSPATIAL International Workshop on Computational Transportation Science (IWCTS '21). Association for Computing Machinery, 2021, 1-9